# EUROPÄISCHE PATENTSCHRIFT

(11) **EP 2 275 475 B1**
(45) Veröffentlichungstag und Bekanntmachung des Hinweises auf die Patenterteilung: **13.03.2013**
(21) Anmeldenummer: 10165461.4
(22) Anmeldetag: 10.06.2010
(51) Int. Cl.: C08J 9/32

(54) **Verfahren zur Herstellung einer Kautschukmischung**
Method for producing a rubber mixture
Procédé de fabrication d'un mélange de caoutchouc

(30) Priorität: 13.07.2009 DE 102009026165
(43) Veröffentlichungstag der Anmeldung: 19.01.2011
(73) Patentinhaber: ContiTech Elastomer-Beschichtungen GmbH, 30165 Hannover (DE)
(72) Erfinder: Eymer, Heiko, 37154, Northeim (DE); Perkovic, Thomas, 37120, Bovenden (DE); Herrmann, Joachim, 37154, Northeim (DE); Moldenhauer, Thomas, 37154, Northeim (DE); Meyer, Stephan, 31535, Neustadt (DE); Luther, Sabine, 30519 Hannover (DE)
(74) Vertreter: Finger, Karsten

(56) Entgegenhaltungen:
- WO-A1-03/006222
- DE-A1- 2 117 892
- GB-A- 2 241 241

## Beschreibung

Die Erfindung betrifft ein Verfahren zur Herstellung einer Kautschukmischung, die hohle, expandierte Mikrokugeln in einer Größe von 5 bis 100 µm enthält. Ferner betrifft die Erfindung die Verwendung der nach dem Verfahren hergestellten Kautschukmischung für die Herstellung einer kompressiblen Gummischicht mit einer Dichte von 0,5 bis 1 kg/dm³.

Hohle Mikrokugeln (Mikrosphären) aus Glas, Phenolharz, Kohlenstoff oder thermoplastischem Kunststoffmaterial sind schon lange bekannt und werden in unterschiedlichsten Bereichen eingesetzt. Sie weisen Durchmesser im µm-Bereich auf. Beispielsweise werden expandierbare Mikrokugeln, die mit einem Treibmittel gefüllt sind und sich beim Erwärmen ausdehnen, für Antirutschbeschichtungen, Teppichuntermaterial oder Druckfarben mit dreidimensionalen Effekten eingesetzt. In PVC oder anderen Thermoplasten bieten die expandierbaren Mikrokugeln den Vorteil gegenüber herkömmlichen chemischen Treibmitteln, dass sie kontrolliert bei niedrigen Temperaturen schäumen, eine homogene Zellstruktur bewirken und ein größeres Zeit/Temperaturfenster aufweisen, bei dem ein Aufschäumen ohne Zusammenbruch der Zellstruktur vonstatten geht. Derartige Mikrokugeln werden z. B. unter dem Namen Expancel^{®} von der Firma Akzo Nobel vertrieben.

Bereits vorexpandierte Mikrokugeln werden als leichte Füllstoffe zur Gewichtsreduktion von z. B. Dämmmaterial und Farbe eingesetzt. Zusätzlich ergeben sich oft auch Vorteile hinsichtlich der Akustik des erzeugten Materials.

Die vorgenannten Eigenschaften der Mikrokugeln hat man sich schon im Bereich der Kautschuktechnologie zu Nutze gemacht. So ist aus der EP 1 263 852 B1 ein geschäumtes Kautschukmaterial zu akustischen Entkopplung oder als Dämpfungsmaterial für marine Anwendungen bekannt. Nicht vorexpandierte Mikrokugeln aus thermoplastischem Material werden dabei unter milden Bedingungen in verschiedene Kautschukmischungen eingemischt. Die Mikrokugeln expandieren dann beim Heiz- und Vulkanisationsprozess und bilden eine Schaumstruktur.

In der DE-OS 2 117 892 werden Mikrokugeln für den Einsatz in der kompressiblen Schicht von Gummidrucktüchern vorgeschlagen. Hohle, thermoplastische Kunststoff-Mikrokugeln können dabei sowohl in vorexpandierter Form als auch in expandierbarer Form eingesetzt werden. Ein in der DE-OS 2 117 892 vorgeschlagenes und häufig genutztes Verfahren zur Einbringung der Mikrokugeln in das Kautschukpolymer besteht in einem Verteilen der Mikrokugeln in einer Kautschukmischungslösung aus Kautschukmischung und organischem Lösemittel. Diese Lösung wird dann zu einer Schicht gewünschter Dicke vergossen oder verteilt (Rakelverfahren), getrocknet und vulkanisiert. Die Lösung kann dabei direkt auf andere Schichten des Drucktuches aufgegossen oder darauf verteilt werden, beispielsweise auf einer Verstärkungsschicht aus einem Gewebe. Das Verfahren ist lösemittelbehaftet und daher ökologisch bedenklich. Ferner ist es energie- und kostenintensiv, da zunächst eine Kautschukmischungslösung hergestellt werden muss und nach dem Verteilen das Lösemittel vor der Vulkanisation wieder ausgetrieben werden muss.

Schwierigkeiten ergeben sich bei Mikrokugeln, insbesondere bei vorexpandierten Mikrokugeln, wenn sie in kompakte Kautschukmischungen eingebracht werden sollen, da bei den herkömmlichen Bedingungen der Mischungsverarbeitung auf Walzwerken oder in Mischern so hohe Scherkräfte auftreten, dass die Mikrokugeln zerstört werden und im Produkt keine Schaumstruktur mehr ausbilden. In der WO 03/006222 A1 werden daher Mikrokugeln mit Hilfe eines niedermolekularen polaren Bindemittels in Kautschukmischungen eingearbeitet.

Der Erfindung liegt daher die Aufgabe zu Grunde, ein Verfahren zur Herstellung einer Kautschukmischung, die hohle, expandierte Mikrokugeln in einer Größe von 5 bis 100 µm enthält, zur Verfügung zu stellen, das einfach und in ökologisch unbedenklicher Weise durchzuführen ist und bei dem die Mikrokugeln im Wesentlichen nicht zerstört werden. Gelöst wird diese Aufgabe erfindungsgemäß dadurch, dass es sich um vorexpandierte Mikrokugeln handelt, die zunächst mit einem Weichmacheröl in einem Gewichtsverhältnis von 5:1 bis 1:5 vermischt werden, und dann im weiteren Verlauf der Herstellung der Kautschukmischung das Mikrokugeln-Weichmacheröl-Gemisch den restlichen Inhaltsstoffen der Kautschukmischung ggf. in mehreren Stufen zudosiert wird.

Es hat sich herausgestellt, dass es durch die vorherige Vermischung der Mikrokugeln mit einem Weichmacheröl im angegebenen Verhältnis gelingt, die vorexpandierten Mikrokugeln ohne die Verwendung eines organischen Lösemittels in eine Kautschukmischung einzumischen, ohne dass die Mikrokugeln bei der Mischungsverarbeitung zerstört werden. Vermutlich bildet das Weichmacheröl eine schützende Schicht um die Mikrokugeln, so dass das umgebende Kautschukmaterial an den Mikrokugeln vorbeigleiten kann.

Das Gewichtsverhältnis von Mikrokugeln zu Weichmacheröl beträgt bei dem erfindungsgemäßen Verfahren 5:1 bis 1:5. Wählt man Verhältnisse mit mehr Mikrokugeln, staubt das Material bei der Verarbeitung sehr stark und die Mikrokugeln werden zum Teil beim Einmischen zerstört. Stellt man das Verhältnis von Mikrokugeln zu Weichmacheröl auf einen Wert größer als 1:5 ein, verklumpt das Mikrokugeln-Weichmacher-Gemisch zu großen Klumpen, die sich nicht gleichmäßig in der Mischung verteilen lassen. Die beste Verteilung in der Kautschukmatrix lässt sich erzielen, wenn die vorexpandierten Mikrokugeln zunächst mit einem Weichmacheröl in einem Gewichtsverhältnis von 2:1 bis 1:2 vermischt werden.

Gemäß einer vorteilhaften Weiterbildung der Erfindung übersteigt die Mischtemperatur der Kautschukmischung bei und nach Zudosierung des Mikrokugeln-Weichmacheröl-Gemisches 110 °C nicht. Bei Temperaturen von mehr als 110 °C wird die Viskosität der Mischung zu niedrig, so dass es zu einem Aufschwimmen der Mikrokugeln und u. U. zu einer Zerstörung der Mikrokugeln kommen kann.

Vorzugsweise liegt die Mischtemperatur der Kautschukmischung bei und nach Zudosierung des Mikrokugeln-Weichmacheröl-Gemisches zwischen 90 und 110 °C. Bei Temperaturen von weniger als 90 °C können die auftretenden Scherkräfte so groß werden, dass die Mikrokugeln teilweise zerstört werden.

Das erfindungsgemäße Verfahren zur Herstellung der Kautschukmischung kann mit unterschiedlichen Mischaggregaten, wie Walzen oder Mischern unterschiedlicher Bauart, durchgeführt werden. Bevorzugt wird die Kautschukmischung jedoch in einem Innenmischer hergestellt, wobei der Füllgrad des Innenmischers ohne Mikrokugeln-Weichmacheröl-Gemisch bei 50 bis 60 Vol.-% liegt. Bei sonst üblichen Innenmischerfüllgraden von 70 Vol.-%, können die auftretenden Scherkräfte zu groß werden. Außerdem beanspruchen die Mikrokugeln durch ihre geringe Dichte viel Volumen im Innenmischer. Liegt der Füllgrad unter 50 Vol.-% kann die Mischung zu kalt und viskos bleiben für eine gleichmäßige Verteilung der Mikrokugeln. Die Mikrokugeln bleiben dann u. U. auf den tangierenden Schaufeln liegen.

Der Kautschukmischung können unterschiedliche Mengen an Mikrokugeln zudosiert werden. Für eine nicht zu trockene Mischung und gute Produkteigenschaften der vulkanisierten Mischung hat es sich als vorteilhaft erwiesen, wenn die Kautschukmischung 1 bis 4 Gew.-% Mikrokugeln enthält.

Gemäß einer weiteren vorteilhaften Weiterbildung der Erfindung, wird das Mikrokugeln-Weichmacheröl-Gemisch am Schluss des Mischprozesses nach Zudosierung sämtlicher anderer Inhaltsstoffe der Kautschukmischung, wie Füllstoffe, Alterungsschutzmittel, Vulkanisationschemikalien usw., zur Mischung gegeben. Auf diese Weise kann die mechanische Belastung der Mikrokugeln weiter reduziert werden.

Die Herstellung des Mikrokugeln-Weichmacheröl-Gemisches kann auf verschiedene Arten erfolgen, z. B. können die Mikrokugeln von Hand in das Weichmacheröl mit Hilfe eines Rührwerkzeuges eingerührt werden. Besonders effektiv erfolgt die Herstellung des Mikrokugeln-Weichmacheröl-Gemisches jedoch in einem Fluidmischer. Bei einem Fluidmischer handelt es sich um einen Hochgeschwindigkeitsmischer mit Erwärmung, der ein schnelles Einmischen bei hoher Drehzahl erlaubt.

Bei den im erfindungsgemäßen Verfahren eingesetzten hohlen Mikrokugeln kann es sich um solche aus Glas, Phenolharz oder Kohlenstoff handeln. Vorzugsweise werden jedoch Mikrokugeln aus thermoplastischem Kunststoffmaterial eingesetzt. Diese weisen eine gewisse Elastizität auf und halten den Scherkräften in einer Kautschukmischung besser stand.

Um das Verfahren weiter zu vereinfachen, hat es sich als vorteilhaft herausgestellt, sämtliches, in der Kautschukmischung vorhandene Weichmacheröl als Mikrokugeln-Weichmacheröl-Gemisch der Kautschukmischung zu zudosieren. Bei dem Weichmacheröl handelt es dabei dann um jenes oder jene, die man auch sonst für diese Kautschukmischung geplant hatte. Die Kautschukmischung für die kompressible Schicht von Drucktüchern basiert dabei häufig auf Nitril- oder hydriertem Nitrilkautschuk der mit Schwefel oder peroxidisch vernetzt ist.

Die nach dem erfindungsgemäßen Verfahren hergestellte Kautschukmischung kann bevorzugt für die Herstellung einer kompressiblen Gummischicht mit einer Dichte von 0,5 bis 1 kg/dm³ verwendet werden. So können beispielsweise dünne Moosgummiplatten oder kompressible Gummischichten von Drucktüchern mit Dicken von 0,35 bis 0,6 mm auf einfache und ökologisch unbedenkliche Weise aus der Kautschukmischung nach Extrusion, Walzen und Vulkanisation erzeugt werden.

Damit die Mikrokugeln auch bei nachfolgenden Extrusions- und Walzvorgängen nicht zu stark beansprucht und u. U. zerstört werden, wird die Gummischicht durch Extrusion der Kautschukmischung mit den hohlen, vorexpandierten Mikrokugeln bei 90 bis 110 °C und anschließendem Walzen ohne Friktion erzeugt. Dies kann z. B. auf einer Extruder-Roller-Head-Anlage erfolgen.

Eine auf diese Weise extrudierte und gewalzte Kautschukmischungslage kann einfach mit weiteren Gewebe- und/oder Kautschukmischungslagen dubliert werden. Ein Rakelverfahren mit Kautschukmischungslösungen in organischem Lösemittel entfällt.

Um die Mikrokugeln bei der Vulkanisation nicht zu zerstören, wird die Kautschukmischung bzw. der Verbund aus Kautschukmischungslage(n) und Gewebelage(n) vorteilhafterweise bei einem Druck von weniger als 5 bar und bei einer Temperatur von weniger als 160 °C im Autoklaven vulkanisiert.

Die nach dem erfindungsgemäßen Verfahren hergestellte Kautschukmischung wird bevorzugt für die Herstellung eines Drucktuches eingesetzt. Sie bildet dort die kompressible Gummischicht. Neben den Vorteilen der Umweltfreundlichkeit und Wirtschaftlichkeit, bieten sich bei Verwendung im Drucktuch noch die Vorteile, dass die bereits vorexpandierten Mikrokugeln ihr Volumen bei der Vulkanisation nicht mehr ändern und daher die kompressible Schicht mit allen anderen Schichten des Drucktuches gemeinsam vulkanisiert werden kann, eine separate Vulkanisation mit anschließendem Schleifen, wie bei Treibmittelverfahren üblich, ist nicht erforderlich.

Anhand eines Ausführungsbeispiels soll die Erfindung näher erläutert werden, ohne dabei auf dieses beschränkt zu sein.

Es wurde eine auf Nitrilkautschuk basierende Kautschukmischung mit 2 Gew.-% hohlen expandierten Mikrokugeln des Typs Expancel® Mikrospären DE 40 der Firma Akzo Nobel hergestellt. Dabei wurden die Mikrokugeln zunächst in einem Fluidmischer mit einem synthetischen Weichmacheröl auf der Basis eines Phthalsäureesters im Gewichtsverhältnis von 1:1 gemischt. Die Mischzeit betrug ca. 45 min. Zur Zwischenlagerung wurde das Mikrokugeln-Weichmacheröl-Gemisch in Beutel aus Polyethylen gefüllt. Dann erfolgte die Herstellung einer Kautschukmischung auf Basis von Nitrilkautschuk mit den üblichen Zuschlagstoffen, wie Alterungsschutzmitteln, Füllstoffen (insbesondere Ruß), Stearinsäure, Zinkoxid, in einem Innenmischer ohne die Zudosierung des Mikrokugeln-Weichmacheröl-Gemisches mit anschließendem Auswalzen zu einem Fell über ein Walzwerk. Dieser so genannte Vorbatch wurde mit Schwefel und Vulkansationsbeschleuniger in einen Innenmischer überführt und das Ganze auf 80 °C erwärmt. Der Füllgrad des Innenmischers lag bei ca. 50 - 60 Vol.-%. Dann wurde die Hälfte des benötigten Mikrokugeln-Weichmacheröl-Gemisches hinzugefügt und auf 90 bis 100 °C erwärmt. Im Anschluss erfolgte die Zugabe der zweiten Hälfte und die erneute Erwärmung der Mischung auf 90 bis 100 °C. Die Mischung wurde auf Bahnen einer Dicke von 8 bis 10 mm ausgewalzt.

Die vorgenannte Kautschukmischung wurde nun für die Herstellung der kompressiblen Schicht eines Drucktuches eingesetzt. Dazu wurde die Kautschukmischung auf einer Extruder-Roller-Head-Anlage bei 90 bis 110 °C extrudiert und ohne Friktion zu Platten einer Dicke von 0,5 mm gewalzt. Diese Platten wurden mit einem Gewebe und einer Deckplatte dubliert und bei einer Temperatur von ca. 150 °C und einem Druck von ca. 3,5 bar im Autoklaven vulkanisiert. Das sich daraus ergebende Drucktuch zeichnete sich durch eine sehr gleichmäßige kompressible Gummischicht mit geschlossenen Gasporen aus, die eine Dichte von ca. 0,75 kg /dm³ aufwies.

Da die Mikrokugeln ohne Lösemittel in die Kautschukmischung eingebracht wurden, entfiel das nachträgliche Austreiben des Lösemittels. Die gleichzeitige Vulkanisation der verschiedenen Drucktuchschichten ermöglichte es außerdem auf ein Schleifen von separat vulkanisierten Schichten zu verzichten.

## Patentansprüche

1. Verfahren zur Herstellung einer Kautschukmischung, die hohle, expandierte Mikrokugeln in einer Größe von 5 bis 100 µm enthält,
**dadurch gekennzeichnet, dass** es sich um vorexpandierte Mikrokugeln handelt, die zunächst mit einem Weichmacheröl in einem Gewichtsverhältnis von 5:1 bis 1:5 vermischt werden, und dann im weiteren Verlauf der Herstellung der Kautschukmischung das Mikrokugeln-Weichmacheröl-Gemisch den restlichen Inhaltsstoffen der Kautschukmischung ggf. in mehreren Stufen zudosiert wird.

2. Verfahren nach Anspruch 1, **dadurch gekennzeichnet, dass** die vorexpandierten Mikrokugeln zunächst mit einem Weichmacheröl in einem Gewichtsverhältnis von 2:1 bis 1:2 vermischt werden

3. Verfahren nach Anspruch 1oder 2, **dadurch gekennzeichnet, dass** die Mischtemperatur der Kautschukmischung bei und nach Zudosierung des Mikrokugeln-Weichmacheröl-Gemisches 110 °C nicht übersteigt.

4. Verfahren nach Anspruch 3, **dadurch gekennzeichnet, dass** die Mischtemperatur der Kautschukmischung bei und nach Zudosierung des Mikrokugeln-Weichmacheröl-Gemisches zwischen 90 und 110 °C liegt.

5. Verfahren nach zumindest einem der vorhergehenden Ansprüche, **dadurch gekennzeichnet, dass** die Mikrokugeln enthaltende Kautschukmischung in einem Innenmischer bei einem Füllgrad von 50 bis 60 Vol.-%, ohne Berücksichtigung des Mikrokugeln-Weichmacheröl-Gemisches, hergestellt wird.

6. Verfahren nach zumindest einem der vorhergehenden Ansprüche, **dadurch gekennzeichnet, dass** die Kautschukmischung 1 bis 4 Gew.-% Mikrokugeln enthält.

7. Verfahren nach zumindest einem der vorhergehenden Ansprüche, **dadurch gekennzeichnet, dass** das Mikrokugeln-Weichmacheröl-Gemisch am Schluß nach Zudosierung sämtlicher anderer Inhaltsstoffe der Kautschukmischung zur Mischung gegeben wird.

8. Verfahren nach zumindest einem der vorhergehenden Ansprüche, **dadurch gekennzeichnet, dass** die Herstellung des Mikrokugeln-Weichmacheröl-Gemisches in einem Fluidmischer erfolgt.

9. Verfahren nach zumindest einem der vorhergehenden Ansprüche, **dadurch gekennzeichnet, dass** die hohlen Mikrokugeln eine Hülle aus einem thermoplastischen Material aufweisen.

10. Verfahren nach zumindest einem der vorhergehenden Ansprüche, **dadurch gekennzeichnet, dass** sämtliches, in der Kautschukmischung vorhandene Weichmacheröl als Mikrokugeln-Weichmacheröl-Gemisch der Kautschukmischung zudosiert wird.

## Claims

1. Process for producing a rubber mixture which comprises hollow, expanded microbeads of size from 5 to 100 µm,
**characterized in that** pre-expanded microbeads are involved and are first mixed in a ratio by weight of from 5:1 to 1:5 with a plasticizer oil, and then, during the further course of the production of the rubber mixture, the microbeads-plasticizer-oil mixture is metered, optionally in a plurality of stages, into the remaining ingredients of the rubber mixture.

2. Process according to Claim 1, **characterized in that** the pre-expanded microbeads are first mixed in a ratio by weight of from 2:1 to 1:2 with a plasticizer oil.

3. Process according to Claim 1 or 2, **characterized in that** the mixing temperature of the rubber mixture while, and after, the mixture of microbeads and plasticizer oil is metered into the system does not exceed 110°C.

4. Process according to Claim 3, **characterized in that** the mixing temperature of the rubber mixture while, and after, the mixture of microbeads and plasticizer oil is metered into the system is from 90 to 110°C.

5. Process according to at least one of the preceding claims, **characterized in that** the rubber mixture comprising microbeads is produced in an inner mixer at a fill level which, ignoring the microbeads-plasticizer-oil mixture, is from 50 to 60% by volume.

6. Process according to at least one of the preceding claims, **characterized in that** the rubber mixture comprises from 1 to 4% by weight of microbeads.

7. Process according to at least one of the preceding claims, **characterized in that** the microbeads-plasticizer-oil mixture is added to the mixture finally after all the other ingredients of the rubber mixture have been metered into the mixture.

8. Process according to at least one of the preceding claims, **characterized in that** the microbeads-plasticizer-oil mixture is produced in a fluid mixer.

9. Process according to at least one of the preceding claims, **characterized in that** the hollow microbeads have a shell made of a thermoplastic material.

10. Process according to at least one of the preceding claims, **characterized in that** all of the plasticizer oil present in the rubber mixture is metered in the form of microbeads-plasticizer-oil mixture into the rubber mixture.

## Revendications

1. Procédé de préparation d'un mélange de caoutchouc qui contient des microbilles creuses expansées d'une taille de 5 à 100 µm,
**caractérisé en ce que**
les microbilles sont des microbilles pré-expansées qui sont d'abord mélangées avec une huile plastifiante dans un rapport pondéral de 5:1 à 1:5 et
**en ce que** le mélange d'huile plastifiante et de microbilles est ajouté au reste des constituants du mélange de caoutchouc au cours de la poursuite de la préparation du mélange de caoutchouc, éventuellement en plusieurs étapes.

2. Procédé selon la revendication 1, **caractérisé en ce que** les microbilles pré-expansées sont d'abord mélangées avec une huile plastifiante dans un rapport pondéral de 2:1 à 1:2.

3. Procédé selon les revendications 1 ou 2, **caractérisé en ce que** la température du mélange de caoutchouc pendant et après l'addition du mélange d'huile plastifiante et de microbilles ne dépasse pas 110°C.

4. Procédé selon la revendication 3, **caractérisé en ce que** la température du mélange de caoutchouc pendant et après l'addition du mélange d'huile plastifiante et de microbilles est comprise entre 90 et 110°C.

5. Procédé selon au moins l'une des revendications précédentes, **caractérisé en ce que** le mélange de caoutchouc contenant les microbilles est préparé dans un mélangeur interne à un taux de remplissage de 50 à 60 % en volume sans tenir compte du mélange d'huile plastifiante et de microbilles.

6. Procédé selon au moins l'une des revendications précédentes, **caractérisé en ce que** le mélange de caoutchouc contient de 1 à 4 % en poids de microbilles.

7. Procédé selon au moins l'une des revendications précédentes, **caractérisé en ce que** le mélange d'huile plastifiante et de microbilles est ajouté au mélange après l'addition de tous les autres constituants du mélange de caoutchouc.

8. Procédé selon au moins l'une des revendications précédentes, **caractérisé en ce que** la préparation du mélange d'huile plastifiante et de microbilles s'effectue dans un mélangeur à fluide.

9. Procédé selon au moins l'une des revendications précédentes, **caractérisé en ce que** les microbilles creuses présentent une enveloppe en matériau thermoplastique.

10. Procédé selon au moins l'une des revendications précédentes, **caractérisé en ce que** la totalité de l'huile plastifiante prévue dans le mélange de caoutchouc est ajoutée au mélange de caoutchouc sous la forme d'un mélange d'huile plastifiante et de microbilles.
